# EUROPEAN PATENT APPLICATION

(11) **EP 4 647 904 A1**
(43) Date of publication of application: **12.11.2025**
(21) Application number: 24806088.1
(22) Date of filing: 24.01.2024
(51) Int. Cl.: G06F 9/451, G06F 1/3234, G06F 40/186

(54) **DATA ACCESS METHOD AND ELECTRONIC DEVICE**

(30) Priority: 16.05.2023 CN 202310554186
(71) Applicant: Huawei Technologies Co., Ltd., Shenzhen, Guangdong 518129 (CN)
(72) Inventor: GONG, Ashi, Shenzhen, Guangdong 518129 (CN); LI, Weifeng, Shenzhen, Guangdong 518129 (CN); LI, Youfu, Shenzhen, Guangdong 518129 (CN); HAN, Lu, Shenzhen, Guangdong 518129 (CN)
(74) Representative: Goddar, Heinz J.
(86) International application number: PCT/CN2024/073882
(87) International publication number: WO 2024/234724

(57) **Abstract**

This application provides a data access method and an electronic device, and relates to the field of terminal technologies. In this application, a widget is refreshed and displayed by using a data proxy service without frequently starting a data producer, thereby reducing system power consumption. The method includes: The data proxy service obtains, in response to an operation of creating a widget by a user, a data processing template configured by a widget provider and display data information configured by a data provider, where the data proxy service has permission to reside in the electronic device. A first widget is displayed, where first widget display data of the first widget corresponds to the data processing template and first display data indicated by the display data information. The data proxy service refreshes the first widget in response to a preset condition being met, where the data proxy service determines second widget display data of a refreshed first widget based on the data processing template and second display data indicated by the display data information. The refreshed first widget is displayed based on the second widget display data.

## Description

This application claims priority to Chinese Patent Application No. 202310554186.4, filed with the China National Intellectual Property Administration on May 16, 2023 and entitled "DATA ACCESS METHOD AND ELECTRONIC DEVICE", which is incorporated herein by reference in its entirety.

### TECHNICAL FIELD

Embodiments of this application relate to the field of terminal technologies, and in particular, to a data access method and an electronic device.

### BACKGROUND

With development of terminal technologies, widget types are increasingly diversified, and users use widgets more frequently. In a process of displaying a widget, an electronic device refreshes and displays the widget based on a specific period or a specific trigger condition. When the widget is refreshed, the electronic device first starts a widget provider process, and then the widget provider process starts a data provider process, to obtain latest widget display data. Frequent widget refresh causes frequent start of the widget provider process and the data provider process, increases system power consumption, and causes performance pressure of the electronic device.

### SUMMARY

To resolve the foregoing technical problem, this application provides a data access method and an electronic device. According to the technical solution provided in this application, a widget is refreshed and displayed by using a data proxy service without frequently starting a data producer, thereby reducing system power consumption.

To achieve the foregoing technical objective, this application provides the following technical solutions.

According to a first aspect, a data access method is provided, applied to an electronic device. The electronic device includes a data proxy service, and the data proxy service has permission to reside in the electronic device. The method includes: The data proxy service obtains, in response to an operation of creating a widget by a user, a data processing template configured by a widget provider and display data information configured by a data provider. A first widget is displayed, where first widget display data of the first widget corresponds to the data processing template and first display data indicated by the display data information. The data proxy service refreshes the first widget in response to a preset condition being met, where the data proxy service determines second widget display data of a refreshed first widget based on the data processing template and second display data indicated by the display data information. The refreshed first widget is displayed based on the second widget display data.

In some examples, in a widget refresh process, the electronic device does not run the widget provider and/or the data provider.

In some embodiments, in a widget creation process, a data producer publishes related data of the widget to the data proxy service, for example, including the data processing template and the display data information. In this way, in the subsequent widget refresh process, the data proxy service can directly determine the widget display data based on the related data of the widget, and trigger widget refresh without waking up the data producer.

In this way, because the data proxy service has the permission to reside in the electronic device, the data proxy service does not need to be started or stopped. This avoids power consumption and performance generated by lifecycle management and device resource allocation and reclamation of the data producer that are caused by frequently starting the data producer in the widget refresh process.

According to the first aspect or any implementation of the first aspect, the preset condition includes: The data proxy service receives a first indication for modifying display data indicated by the display data information. Alternatively, the data proxy service determines that a refresh occasion is met. Alternatively, the data proxy service receives a second indication that is of a widget owner and that indicates to refresh the first widget, where the widget owner is used to display the first widget.

For example, a meeting reminder is displayed on a calendar widget. To be specific, a data provider corresponding to the calendar widget is a calendar application, and a meeting application has write permission on calendar data provided by the calendar application, for example, adding a meeting schedule, deleting a meeting schedule, or modifying a meeting schedule in the calendar data. For example, the electronic device determines, in response to a user operation, to cancel a meeting originally planned to be held from 10:00 a.m. to 11:00 a.m. tomorrow. In response to cancellation of the meeting, the meeting application may send a first indication to the data proxy service, and carries a data identifier of calendar data and a control parameter in the first indication. Correspondingly, the data proxy service determines, based on the received first indication, that the meeting application indicates to modify a meeting schedule in the calendar data indicated by display data information corresponding to the calendar widget. The data proxy service determines, based on permission configured by the calendar application in a process of publishing the calendar data, that the meeting application has the write permission on the calendar data. In this case, the data proxy service modifies the corresponding meeting schedule based on the first indication. Then, based on modification of the meeting schedule, the data proxy service may generate second widget display data of the calendar widget based on widget layout information indicated by a data processing template corresponding to the currently displayed calendar widget and second display data (namely, modified schedule data) indicated by the display data information, to trigger refresh of the displayed calendar widget.

For another example, the data processing template further includes a scheduler, and the scheduler is used to enable the data proxy service to determine whether the refresh occasion is met. For example, the widget provider configures, by using the scheduler, an occasion for cyclically triggering widget refresh. For example, a calendar widget triggers, at 18:00 p.m. every day, to refresh and display a schedule on a next day. In this process, in response to the refresh occasion indicated by the scheduler, the data proxy service determines that the preset condition is met, rereads corresponding second display data based on the display data information, matches the second display data based on layout information indicated by a data processing template corresponding to the displayed widget, determines second widget display data, and refreshes and displays the widget.

For another example, in a process of displaying a first interface of a home screen, the electronic device detects a sliding operation of the user, and determines that the user indicates to display a second interface of the home screen. If the to-be-displayed second interface includes a first widget, the home screen (namely, the widget owner) may send a second indication to the data proxy service, and carry, in the second indication, a widget ID of the first widget and an ID of a data processing template corresponding to a style of the to-be-displayed first widget. Correspondingly, after receiving the second indication, the data proxy service may determine that the preset condition is met. In this case, the data proxy service obtains a display template corresponding to the widget ID and the data processing template corresponding to the ID of the data processing template, determines a URI indicated by an ID of the display template, to determine corresponding display data information, and queries, based on a query condition carried in the data processing template, display data indicated by the display data information for second display data. Then, the data proxy service matches the data processing template with the second display data, to obtain second widget display data, and feeds back the second display data to the widget owner, to trigger widget refresh, for example, displaying the first widget on the second interface.

In this way, widget refresh is triggered in a plurality of manners, and the widget provider and the data provider do not need to be woken up in the widget refresh process, thereby effectively reducing power consumption and improving performance of the electronic device.

According to the first aspect or any implementation of the first aspect, that the data proxy service obtains, in response to the operation of creating the widget by the user, the data processing template configured by the widget provider and the display data information configured by the data provider includes: In response to the operation of creating the widget by the user, the widget provider configures the data processing template corresponding to the first widget, and the data provider configures the display data information corresponding to display data accessed by the first widget. The widget provider sends the data processing template to the data proxy service, and the data provider sends the display data information to the data proxy service.

In some embodiments, in a widget creation process, the widget provider (for example, a calendar application) configures a display template of a widget, for example, including a data identifier and layout information of to-be-displayed widget data. The data provider (for example, the calendar application) configures display data information of the widget, for example, including a data identifier and read/write permission of display data of the to-be-displayed widget. Optionally, the data identifier is, for example, a uniform resource identifier of the display data, and indicates a storage location of the display data.

Optionally, after the widget is created, a data consumer may display the widget. In addition, after widget configuration is completed, the data proxy service may obtain the display template and the widget display information that are published by the data producer (for example, including the widget provider and the data provider).

In this way, the data proxy service obtains, in advance, the data processing template published by the widget provider and the display data information published by the data provider, and can refresh the widget without waking up the widget provider and the data provider in the widget refresh process, thereby decoupling a cycle of the widget provider and a cycle of the data provider, effectively reducing the power consumption of the electronic device, and improving the performance of the electronic device.

According to the first aspect or any implementation of the first aspect, the data processing template includes a query condition, and the query condition is used by the data proxy service to query the display data indicated by the display data information for the second display data.

For example, a same widget has different display styles, and the widget of different styles may correspond to different data processing templates. The data proxy service queries the display data indication information for corresponding display data based on the query condition carried in the data processing template, to refresh and display a widget of a corresponding style.

For example, a calendar widget that is currently to be refreshed is used to display schedules of today and tomorrow. In this case, in a process of publishing data of the calendar widget, a calendar application configures a corresponding data processing template 1, and a corresponding query condition 1 is to query for schedule data in a timestamp range from today to tomorrow in schedule data. Subsequently, when refreshing the calendar widget, the data proxy service may find, based on the query condition 1, the calendar data (for example, second display data) in the timestamp range from today to tomorrow in calendar data indicated by display data information. Then, the data proxy service refreshes and displays the calendar widget based on the found second display data and the data processing template 1.

In this way, a same widget is displayed in different styles by using the query condition.

According to the first aspect or any implementation of the first aspect, that the data proxy service determines the second widget display data of the refreshed first widget based on the data processing template and the second display data indicated by the display data information includes: The data proxy service generates the second widget display data based on the second display data and the data processing template, where the data processing template indicates layout information of the second display data.

According to the first aspect or any implementation of the first aspect, the data processing template further includes a scheduler, and the scheduler is used to enable the data proxy service to determine whether the refresh occasion is met.

According to the first aspect or any implementation of the first aspect, the display data information includes a data identifier, read/write permission, and data source information of the display data configured by the data provider.

In some examples, the read/write permission indicates whether an application has permission to read display data indicated by a data identifier, and whether the application data has permission to write data into the display data indicated by the data identifier, for example, adding data, deleting data, or modifying data.

In this way, security of the display data is ensured through data permission. In addition, data configured with the write permission may trigger writing of display data, and further trigger the data proxy service to refresh display of a corresponding widget based on newly written data.

According to the first aspect or any implementation of the first aspect, the widget provider is further used to configure a display template corresponding to the first widget, where the display template includes a data identifier and layout information of the display data corresponding to the first widget, and the display template includes data processing templates that are of one or more styles and that correspond to the first widget.

For example, in response to an operation of creating a calendar widget by a user, the widget provider may configure a display template corresponding to the calendar widget. The display template includes a plurality of data processing templates corresponding to the calendar widget. The electronic device may display, based on one of the data processing templates, a calendar widget indicated to be displayed by the current user operation. Subsequently, in response to an operation that is of the user and that indicates to create a calendar widget of another style, the widget provider may not need to publish a data processing template to the data proxy service. Alternatively, in response to the operation of creating the widget by the user, the widget provider separately configures a corresponding data processing template, and publishes the data processing template to the data proxy service.

According to the first aspect or any implementation of the first aspect, the data proxy service is further used to provide a data storage service for the data provider, the data proxy service includes a data directory corresponding to the data provider, the display data information includes the data directory, and that the data proxy service refreshes the first widget in response to the preset condition being met includes: The data proxy service determines a storage location of the second display data based on the data directory in response to the preset condition being met. The data proxy service obtains the second display data based on the storage location.

Optionally, the data proxy service may be a sub-service in a distributed data management service. Certainly, in actual application, the data proxy service may alternatively be another system service associated with the distributed data management service.

For example, in a process in which the data producer publishes data, the data proxy service may obtain the data directory of the display data, to implement storage management of the display data. Therefore, in the subsequent widget refresh process, the data proxy service can directly obtain, based on the data directory, display data stored in a corresponding storage location. In this way, the display data can be obtained without waking up the data provider, thereby effectively reducing a wakeup frequency of the data provider, and reducing the power consumption of the device.

According to the first aspect or any implementation of the first aspect, the electronic device further includes a system service, the system service is further used to provide a data storage service for the data provider, the system service includes a data directory corresponding to the data provider, and that the data proxy service refreshes the first widget in response to the preset condition being met includes: The data proxy service obtains the data directory from the system service in response to the preset condition being met. The data proxy service determines a storage location of the second display data based on the data directory. The data proxy service obtains the second display data based on the storage location.

Optionally, the system service is, for example, a distributed data management service, and the distributed data management service and the data proxy service may be two independent system services.

For example, when determining that display of the widget needs to be refreshed when the preset condition is met, the data proxy service may request, from the distributed data management service, to obtain the data directory corresponding to the to-be-displayed widget, to obtain the second display data based on the storage location indicated by the data directory. In this way, in the widget refresh process, the display data can be obtained without waking up the data provider, thereby effectively reducing the wakeup frequency of the data provider, and reducing the power consumption of the device.

According to a second aspect, an electronic device is provided. The electronic device includes a processor, a memory, and a display. The memory and the display are coupled to the processor, the memory is configured to store computer program code, the computer program code includes computer instructions, and when the processor reads the computer instructions from the memory, the following steps are performed in the electronic device: A data proxy service obtains, in response to an operation of creating a widget by a user, a data processing template configured by a widget provider and display data information configured by a data provider, where the data proxy service has permission to reside in the electronic device. A first widget is displayed, where first widget display data of the first widget corresponds to the data processing template and first display data indicated by the display data information. The data proxy service refreshes the first widget in response to a preset condition being met, where the data proxy service determines second widget display data of a refreshed first widget based on the data processing template and second display data indicated by the display data information. The refreshed first widget is displayed based on the second widget display data.

According to the second aspect, in a widget refresh process, the electronic device does not run the widget provider and/or the data provider.

According to the second aspect or any implementation of the second aspect, the preset condition includes: The data proxy service receives a first indication for modifying display data indicated by the display data information. Alternatively, the data proxy service determines that a refresh occasion is met. Alternatively, the data proxy service receives a second indication that is of a widget owner and that indicates to refresh the first widget, where the widget owner is used to display the first widget.

According to the second aspect or any implementation of the second aspect, that the data proxy service obtains, in response to the operation of creating the widget by the user, the data processing template configured by the widget provider and the display data information configured by the data provider includes: In response to the operation of creating the widget by the user, the widget provider configures the data processing template corresponding to the first widget, and the data provider configures the display data information corresponding to display data accessed by the first widget. The widget provider sends the data processing template to the data proxy service, and the data provider sends the display data information to the data proxy service.

According to the second aspect or any implementation of the second aspect, the data processing template includes a query condition, and the query condition is used by the data proxy service to query the display data indicated by the display data information for the second display data.

According to the second aspect or any implementation of the second aspect, that the data proxy service determines the second widget display data of the refreshed first widget based on the data processing template and the second display data indicated by the display data information includes: The data proxy service generates the second widget display data based on the second display data and the data processing template, where the data processing template indicates layout information of the second display data.

According to the second aspect or any implementation of the second aspect, the data processing template further includes a scheduler, and the scheduler is used to enable the data proxy service to determine whether the refresh occasion is met.

According to the second aspect or any implementation of the second aspect, the display data information includes a data identifier, read/write permission, and data source information of the display data configured by the data provider.

According to the second aspect or any implementation of the second aspect, the widget provider is further used to configure a display template corresponding to the first widget, where the display template includes a data identifier and layout information of the display data corresponding to the first widget, and the display template includes data processing templates that are of one or more styles and that correspond to the first widget.

According to the second aspect or any implementation of the second aspect, the data proxy service is further used to provide a data storage service for the data provider, the data proxy service includes a data directory corresponding to the data provider, the display data information includes the data directory, and that the data proxy service refreshes the first widget in response to the preset condition being met includes: The data proxy service determines a storage location of the second display data based on the data directory in response to the preset condition being met. The data proxy service obtains the second display data based on the storage location.

According to the second aspect or any implementation of the second aspect, the electronic device further includes a system service, the system service is further used to provide a data storage service for the data provider, the system service includes a data directory corresponding to the data provider, and that the data proxy service refreshes the first widget in response to the preset condition being met includes: The data proxy service obtains the data directory from the system service in response to the preset condition being met. The data proxy service determines a storage location of the second display data based on the data directory. The data proxy service obtains the second display data based on the storage location.

For technical effect corresponding to the second aspect and any implementation of the second aspect, refer to the technical effect corresponding to the first aspect and any implementation of the first aspect. Details are not described herein again.

According to a third aspect, an electronic device is provided. The electronic device has a function of implementing the data access method according to the first aspect and any possible implementation of the first aspect. The function may be implemented by hardware, or may be implemented by hardware executing corresponding software. The hardware or the software includes one or more modules corresponding to the function.

For technical effect corresponding to the third aspect and any implementation of the third aspect, refer to the technical effect corresponding to the first aspect and any implementation of the first aspect. Details are not described herein again.

According to a fourth aspect, a computer-readable storage medium is provided. The computer-readable storage medium stores a computer program (which may also be referred to as instructions or code). When the computer program is executed by an electronic device, the electronic device is enabled to perform the method according to the first aspect or any implementation of the first aspect.

For technical effect corresponding to the fourth aspect and any implementation of the fourth aspect, refer to the technical effect corresponding to the first aspect and any implementation of the first aspect. Details are not described herein again.

According to a fifth aspect, a computer program product is provided. When the computer program product runs on an electronic device, the electronic device is enabled to perform the method according to the first aspect or any implementation of the first aspect.

For technical effect corresponding to the fifth aspect and any implementation of the fifth aspect, refer to the technical effect corresponding to the first aspect and any implementation of the first aspect. Details are not described herein again.

According to a sixth aspect, a circuit system is provided. The circuit system includes a processing circuit, and the processing circuit is configured to perform the method according to first aspect or any implementation of the first aspect.

For technical effect corresponding to the sixth aspect and any implementation of the sixth aspect, refer to the technical effect corresponding to the first aspect and any implementation of the first aspect. Details are not described herein again.

According to a seventh aspect, a chip system is provided, including at least one processor and at least one interface circuit. The at least one interface circuit is configured to: perform a transceiver function, and send instructions to the at least one processor. When the at least one processor executes the instructions, the at least one processor performs the method according to the first aspect or any implementation of the first aspect.

For technical effect corresponding to the seventh aspect and any implementation of the seventh aspect, refer to the technical effect corresponding to the first aspect and any implementation of the first aspect. Details are not described herein again.

### BRIEF DESCRIPTION OF DRAWINGS

FIG. 1(a) and FIG. 1(b) are a diagram of display of a widget according to an embodiment of this application;
FIG. 2 is a diagram of a widget refresh and display procedure according to an embodiment of this application;
FIG. 3 is a diagram of a calendar widget refresh and display procedure according to an embodiment of this application;
FIG. 4 is a diagram of types of an electronic device according to an embodiment of this application;
FIG. 5 is a diagram of a hardware structure of an electronic device according to an embodiment of this application;
FIG. 6 is a block diagram of a software structure of an electronic device according to an embodiment of this application;
FIG. 7 is a diagram of a widget data publishing procedure and a widget refresh and display procedure according to an embodiment of this application;
FIG. 8 is a diagram of styles of a calendar widget according to an embodiment of this application;
FIG. 9(a) and FIG. 9(b) are a diagram of a scenario of adding a schedule according to an embodiment of this application;
FIG. 10(a) to FIG. 10(c) are a diagram of display changes of a calendar widget according to an embodiment of this application;
FIG. 11 is a schematic flowchart of a data access method according to an embodiment of this application; and
FIG. 12 is a diagram of a structure of an electronic device according to an embodiment of this application.

### DESCRIPTION OF EMBODIMENTS

The following describes technical solutions in embodiments of this application with reference to accompanying drawings in embodiments of this application. In descriptions of embodiments of this application, terms used in the following embodiments are merely intended to describe specific embodiments, but are not intended to limit this application. Terms "one", "a", "the", "the foregoing", "this", and "the one" of singular forms used in this specification and the appended claims of this application are intended to include expressions such as "one or more", unless otherwise specified in the context clearly. It should be further understood that, in the following embodiments of this application, "at least one" and "one or more" mean one or more (including two).

Referring to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and their variants all mean "include but are not limited to", unless otherwise specifically emphasized in another manner. A term "connection" includes a direct connection and an indirect connection, unless otherwise specified. "First" and "second" are merely intended for description, and shall not be understood as an indication or implication of relative importance or implicit indication of a quantity of indicated technical features.

In embodiments of this application, a term "example", "for example", or the like is used to give an example, an illustration, or a description. Any embodiment or design scheme described as an "example" or "for example" in embodiments of this application should not be explained as being more preferred or having more advantages than another embodiment or design scheme. Exactly, use of the term "example", "for example", or the like is intended to present a related concept in a specific manner.

In some embodiments, an electronic device displays widgets in a plurality of manners, and widget types are increasingly diversified. For example, some system applications or third-party applications may create corresponding widgets, and data from one or more applications may be displayed on the widgets.

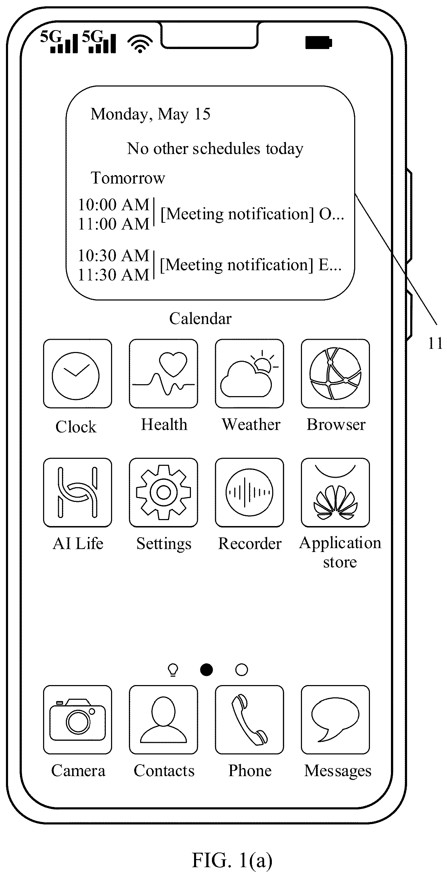

For example, as shown in FIG. 1(a), an electronic device displays a calendar widget 11 on a home screen, and the calendar widget 11 may be used to display data from a calendar application, for example, a date or a schedule. Alternatively, the calendar widget 11 may further display data from another application, for example, a meeting reminder from a meeting application.

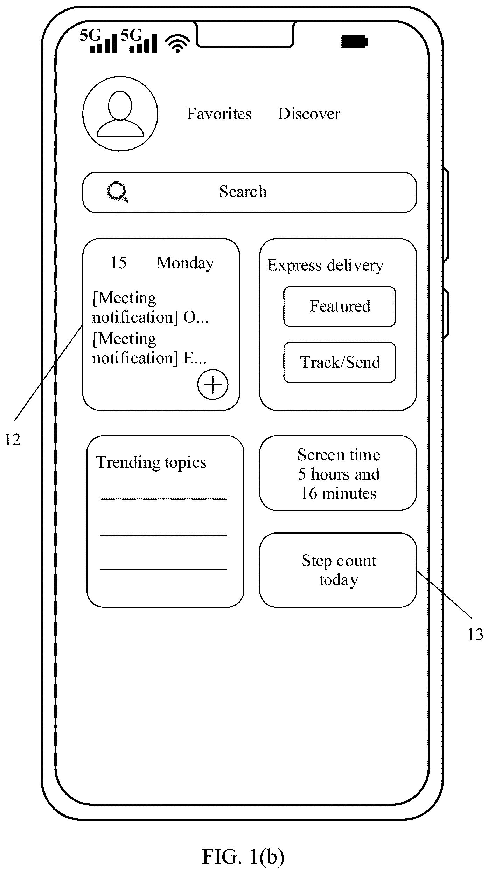

For another example, as shown in FIG. 1(b), the electronic device displays a plurality of types of widgets on a leftmost screen, for example, a calendar widget 12 and a health widget 13.

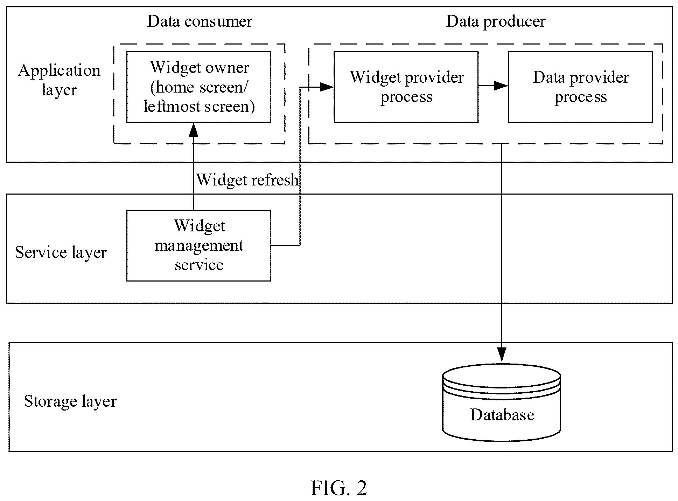

In some embodiments, in a widget display process, the electronic device needs to refresh display of a widget. Widget refresh depends on that an application that accesses data starts, by using a widget management service, an application in which the accessed data is located, to obtain latest widget display data. The application that accesses data may be referred to as a data consumer or a data visitor. The application in which the accessed data is located, or an application that provides data, may be referred to as a data producer, a data provider, or a data source application. The data consumer (or the data producer) is a system application and/or a third-party application. As shown in FIG. 2, a data producer may include a widget provider and a data provider. The widget provider is used to create a widget, configure layout information of the widget, and the like. The data provider is used to provide display data of the widget. The widget provider and the data provider may be a same application. For example, the widget provider is a calendar application and is used to create a calendar widget. The data provider is also the calendar application and is used to provide calendar data displayed on the calendar widget. Alternatively, the widget provider and the data provider are different applications. For example, the widget provider is a local music application and is used to create a music widget. The data provider is a third-party music application installed on the electronic device and is used to provide audio data played on the music widget.

For example, as shown in FIG. 2, a widget management service is used to manage widget refresh. When a widget needs to be refreshed, the widget management service starts a widget provider process, then the widget provider process starts a data provider process, and the data provider process can obtain latest widget display data from a database. Then, the data provider process feeds back the obtained widget display data to the widget management service through the widget provider process. After obtaining the widget display data, the widget management service sends the widget display data to a widget owner (for example, a home screen or a leftmost screen), so that the widget is refreshed and displayed.

It can be learned that frequent widget refresh causes frequent start of the widget provider process and the data provider process, increases system power consumption, and causes performance pressure of the electronic device.

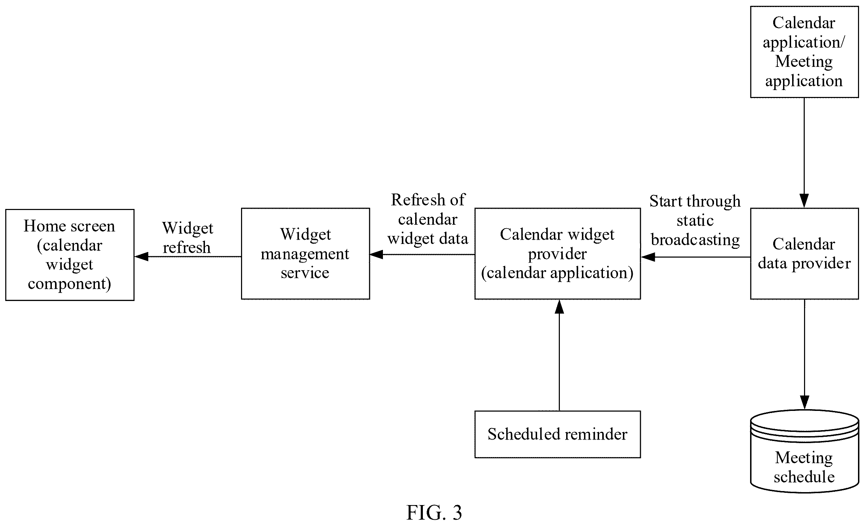

For example, a process of refreshing the calendar widget is used as an example. As shown in FIG. 1(a) and FIG. 1(b), information such as the date and the schedule reminder is displayed on the calendar widget, and the calendar widget is refreshed in a plurality of manners such as a schedule change and a scheduled reminder. For example, a reminder is refreshed before a meeting starts, and a subsequent schedule is refreshed based on preset time. As shown in FIG. 3, a calendar widget is displayed on a home screen, and an application like a calendar application or a meeting application can add data corresponding to a component displayed on the calendar widget. A calendar data provider can obtain the data and store the data in a database. The calendar data provider sends a corresponding schedule reminder to the calendar application in a manner like static broadcasting, and the calendar application, as a calendar widget provider, can generate a scheduled reminder corresponding to the widget. Subsequently, when determining that the calendar widget needs to be refreshed and displayed (for example, based on an occasion indicated by a scheduled reminder), a widget management service starts a process of the calendar application, and starts a calendar data provider process through the process of the calendar application, to obtain, from the database, corresponding calendar widget display data. Then, after obtaining the calendar widget display data, the widget management service sends the calendar widget display data to the home screen. In this way, the home screen may refresh and display the calendar widget, for example, display a meeting reminder on the calendar widget.

Therefore, this application provides a data access method. Data of a data source application is accessed by using a data proxy service, and the data proxy service has permission to reside in an electronic device. In this way, the data proxy service does not need to be frequently started or stopped, thereby reducing system power consumption and improving performance of the electronic device.

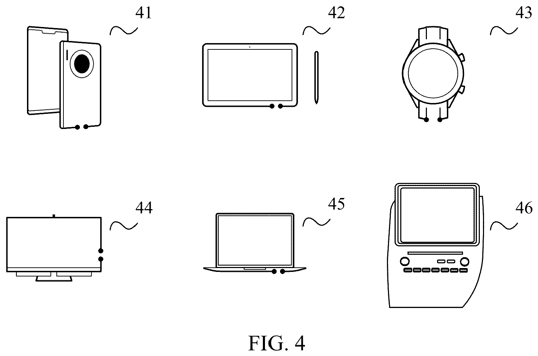

Optionally, the data access method provided in embodiments of this application may be applied to an electronic device 100. For example, as shown in FIG. 4, the electronic device 100 may be specifically a mobile phone 41, a tablet computer 42, a wearable device 43, a smart screen 44, a notebook computer 45, a vehicle-mounted device 46, a computer, an ultra-mobile personal computer (ultra-mobile personal computer, UMPC), a netbook, a personal digital assistant (personal digital assistant, PDA), an artificial intelligence (artificial intelligence, AI) device, or another terminal device. An operating system installed on the electronic device 100 includes but is not limited to iOS^{®}, Android^{®}, HarmonyOS^{®}, Windows^{®}, Linux^{®}, or another operating system. A specific type of the electronic device 100 and an installed operating system are not limited in this application.

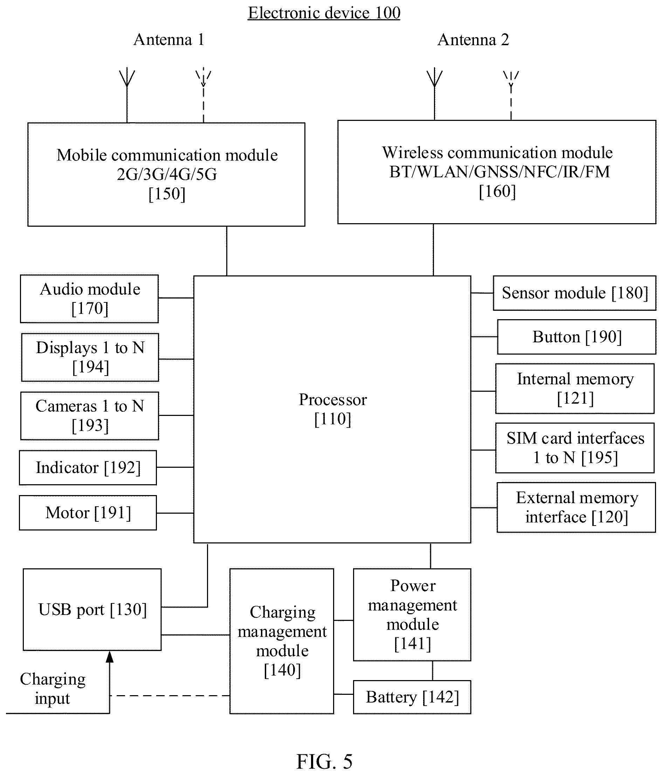

Optionally, FIG. 5 is a diagram of a structure of an electronic device 100. As shown in FIG. 5, the electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, a subscriber identification module (subscriber identification module, SIM) card interface 195, and the like.

It may be understood that the structure shown in this embodiment of this application does not constitute a specific limitation on the electronic device 100. In some other embodiments of this application, the electronic device 100 may include more or fewer components than those shown in the figure, or a combination of some components, or splits from some components, or a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal to complete control of instruction fetching and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identity module, SIM) interface, a universal serial bus (universal serial bus, USB) port, and/or the like.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI interface, to implement a display function of the electronic device 100.

The USB port 130 is a port that conforms to a USB standard specification, and may be specifically a mini USB port, a micro USB port, a USB Type-C port, or the like. The USB port 130 may be configured to connect to a charger to charge the electronic device 100, or may be configured to perform data transmission between the electronic device 100 and a peripheral device. The USB port 130 may alternatively be configured to connect to a headset, to play an audio through the headset. The port may alternatively be configured to connect to another electronic device like an AR device.

It may be understood that an interface connection relationship between the modules illustrated in embodiments of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be made of a liquid crystal display (liquid crystal display, LCD), for example, an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, or a quantum dot light-emitting diode (quantum dot light emitting diodes, QLED). In some embodiments, the electronic device 100 may include one or N displays 194, where N is a positive integer greater than 1.

The camera 193 is configured to capture a static image or a video. An optical image of an object is generated through the lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The external memory interface 120 may be configured to connect to an external storage card, for example, a Micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a sound play function or an image play function), and the like. The data storage area may store data (for example, audio data and an address book) and the like created during use of the electronic device 100. In addition, the internal memory 121 may include a high-speed random access memory, and may further include a nonvolatile memory, for example, at least one magnetic disk storage device, a flash storage device, a universal flash storage (universal flash storage, UFS), and the like. The processor 110 runs instructions stored in the internal memory 121 and/or instructions stored in the memory disposed in the processor, to perform various function applications and data processing of the electronic device 100.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110. The electronic device 100 may perform music playing, recording, or the like through the audio module 170. The audio module 170 may include a speaker, a receiver, a microphone, a headset jack, an application processor, and the like, to implement an audio function.

The sensor module 180 may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt, or may also be configured to provide touch vibration feedback. The indicator 192 may be an indicator light, and may be configured to indicate a charging status and a power change, or may be configured to indicate a message, a missed call, a notification, and the like. The SIM card interface 195 is configured to connect to a SIM card. The electronic device 100 may support one or N SIM card interfaces, where N is a positive integer greater than 1.

A software system of the electronic device 100 may use a layered architecture, an event-driven architecture, a microkernel architecture, a micro service architecture, or a cloud architecture. In this embodiment of this application, an Android system with a layered architecture is used as an example to describe the software structure of the electronic device 100.

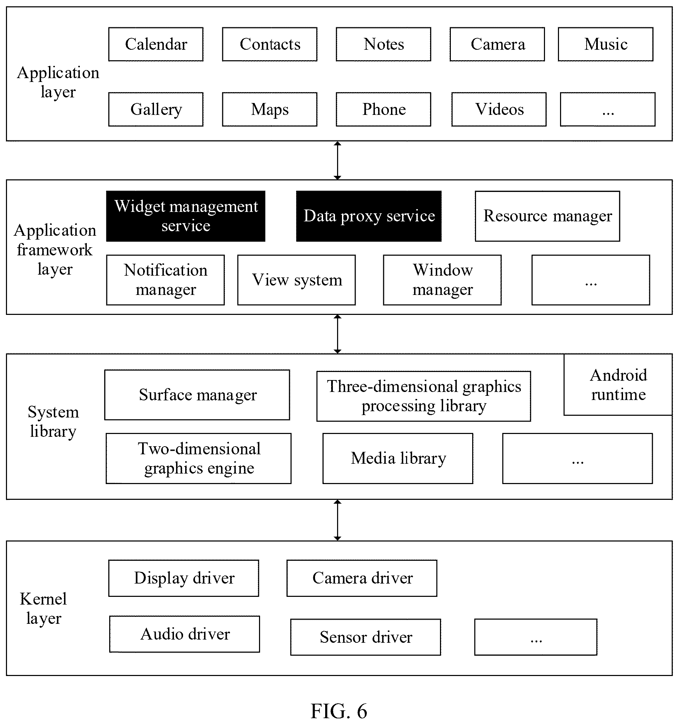

FIG. 6 is a block diagram of the software structure of the electronic device 100 according to an embodiment of this application.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 6, the application package may include applications such as Calendar, Contact, Notes, Health, Clipboard, Gallery, Maps, Camera, and Videos.

The application framework layer provides an application programming interface (application programming interface, API) and a programming framework for an application at the application layer. The application framework layer includes some predefined functions.

As shown in FIG. 6, the application framework layer may include a widget management service, a data proxy service, a window manager, a content provider, a view system, a phone manager, a resource manager, a notification manager, and the like.

The widget management service is used to manage a widget, for example, control widget refresh.

The data proxy service is used to manage a widget template created by an application. A data consumer at the application layer may access, by invoking a widget management service interface, data corresponding to a widget template created by a data producer managed by the data proxy service, to display a widget.

In some examples, the data proxy service may have high system permission, to provide unified proxy for the data producer. Optionally, the data proxy service has permission to directly access the data producer. To be specific, the data proxy service may access data of a data producer in a same manner as the data producer accesses the data of the data producer. In this way, the data of the data producer can be accessed without starting the data producer. Optionally, the data proxy service may have permission to reside in the electronic device. In this way, the data proxy service does not need to be frequently started or stopped, thereby reducing system power consumption of the electronic device.

In some examples, the application framework layer further includes a distributed data management service. The distributed data management service may isolate data of different applications, to ensure that the data of the different applications cannot access each other. An application may create a database by invoking a distributed data service interface, and the database may include data in the database. A distributed data management service module may also provide a database distribution capability between different devices for an application. Between trusted devices, the distributed data management service module may support data synchronization of the application, and provide consistent data access experience on a plurality of devices.

Optionally, the distributed data management service may include the data proxy service. Alternatively, the data proxy service is a service independent of the distributed data management service.

In some examples, the widget management service, the data proxy service, and the distributed data management service may alternatively be located in another software layer of the electronic device. This is not limited in embodiments of this application. For example, the widget management service, the data proxy service, and the distributed data management service may be located in the system library. For ease of description, the following uses an example in which the widget management service, the data proxy service, and the distributed data management service are located at a service layer below the application layer to describe an interaction process of the modules in a widget display process. The service layer may be the application framework layer, the system library, or the like. The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and received, a browsing history and a bookmark, an address book, and the like.

The view system includes visual controls such as a control for displaying text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources for an application such as a localized character string, an icon, an image, a layout file, and a video file.

The notification manager enables an application to display notification information in a status bar, and may be configured to convey a notification message. The notification manager may automatically disappear after a short pause without user interaction. The notification manager may alternatively be a notification that appears in a top status bar of the system in a form of a graph or scroll bar text.

The Android runtime includes a core library and a virtual machine. The Android runtime is responsible for scheduling and management of the Android system.

The kernel library includes two parts: a function that needs to be invoked in Java language and a kernel library of Android.

The application layer and the application framework layer run on the virtual machine. The virtual machine executes Java files of the application layer and the application framework layer as binary files. The virtual machine is configured to perform functions such as object lifecycle management, stack management, thread management, security and abnormality management, and garbage collection.

The system library may include a plurality of functional modules, for example, a surface manager (surface manager), a media library (Media Libraries), a three-dimensional graphics processing library (for example, OpenGL ES), and a two-dimensional graphics engine (for example, SGL).

The surface manager is configured to manage a display subsystem and provide fusion of 2D and 3D layers for a plurality of applications.

The media library supports playback and recording of audios and videos in a plurality of commonly used formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for 2D drawing.

The kernel layer is a layer between hardware and software. The kernel layer includes at least a display driver, a camera driver, an audio driver, and a sensor driver.

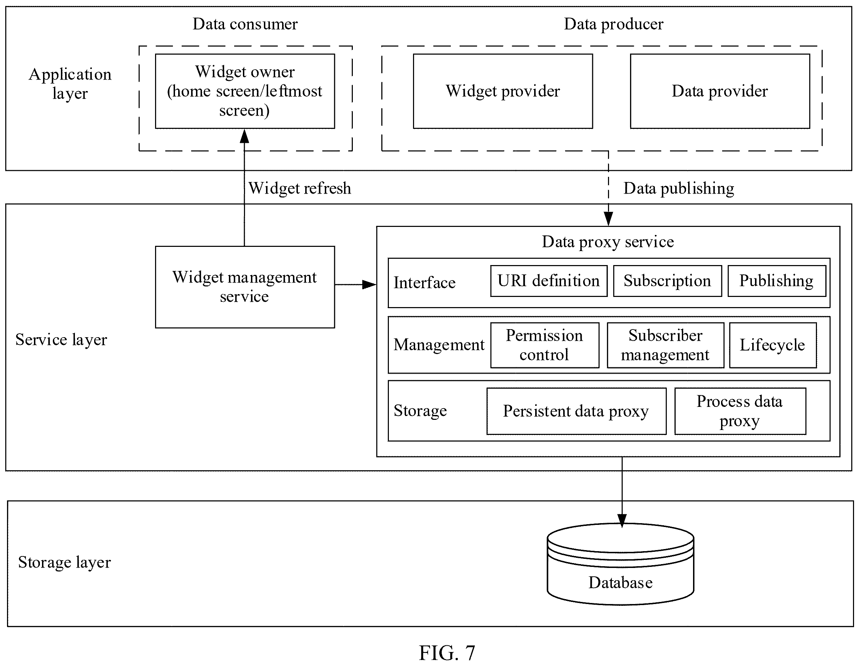

In some embodiments, an embodiment of this application provides a data sharing system. As shown in FIG. 7, the data sharing system includes a data consumer, a data producer, and a data proxy service. The data consumer and the data proxy service may communicate with each other by using a widget management service.

The data consumer is, for example, an application at an application layer in FIG. 7. The data consumer may include a system application and/or a third-party application. For example, the data consumer is a home screen or a leftmost screen. The data consumer can access data provided by a data provider across applications, to display a widget.

The data producer is, for example, an application at the application layer in FIG. 7. The data producer may include a system application and/or a third-party application. Data of the data producer may be accessed by the data consumer in a cross-application access mode.

For example, as shown in FIG. 7, the data producer includes a widget provider and a data provider. The widget provider is used to configure a display template of a widget, for example, including layout information of the widget. The data provider is used to configure display data information of the widget, for example, indicate a storage directory of display data of the widget. The following describes in detail a process in which the widget provider and the data provider configure the display template and the display data information. Details are not described herein.

Optionally, the widget provider is, for example, a system application like a calendar application, a weather application, or a contacts application. Alternatively, the widget provider is, for example, a third-party application like a third-party music application or meeting application. Optionally, the data provider is, for example, a system application like a calendar application or a weather application. Alternatively, the data provider is, for example, a third-party application like a third-party music application or meeting application. Optionally, the widget provider and the data provider may be a same application or different applications. For example, the widget provider is a calendar application and is used to create a calendar widget. The data provider is also the calendar application and is used to provide calendar data displayed on the calendar widget. Alternatively, the widget provider is a local music application and is used to create a music widget. The data provider is a third-party music application installed on an electronic device and is used to provide audio data played on the music widget. Whether the widget provider and the data provider are a same application is not limited in embodiments of this application.

The data proxy service may have high system permission, to provide unified proxy for the data producer. In some embodiments, the data proxy service has permission to directly access the data producer. To be specific, the data proxy service may access data of a data producer in a same manner as the data producer accesses the data of the data producer. In this way, the data of the data producer can be accessed without starting the data producer. In some embodiments, the data proxy service may have permission to reside in the electronic device. In this way, the proxy service does not need to be frequently started or stopped, thereby reducing system power consumption of the electronic device.

In some embodiments, the data proxy service may be implemented as a system service, so that the data proxy service can have the permission to reside in the electronic device and the permission to directly access the data producer. The data proxy service may be registered as the system service in a system service management service, and a function of the system service is registered. In this way, the system service management service may start and manage the system service, namely, the data proxy service, and the function of the system service.

In some embodiments, the data proxy service is deployed in a distributed data management service at an application framework layer (for example, a service layer). The data producer creates the data of the data producer by using the distributed data management service, and a data directory used by the data producer to search for the data is also generated by the distributed data management service. Therefore, the data proxy service deployed in the distributed data management service may obtain the data directory of the data producer more conveniently, and then access the data of the data producer in the same manner as the data producer accesses the data of the data producer. For example, as shown in FIG. 7, the data proxy service is used to store and manage the data provided by the data producer.

It may be understood that implementation of the data proxy service is not limited to the foregoing manner. In some embodiments, the data proxy service may alternatively be another module that is deployed at the application framework layer (for example, the service layer) and that is independent of the distributed data management service. Alternatively, the data proxy service may be deployed in another functional module at the application framework layer (for example, the service layer). In this case, the data proxy service may obtain the data directory of the data producer by using the distributed data management service, and then access the data of the data producer based on the data directory.

Based on the data sharing system, embodiments of this application provide a data access method. In the method, a data consumer may access data of a data producer by using a data proxy service, and does not need to start the data producer. This can improve or avoid a problem of frequently starting a data source application, and further improve another problem like high power consumption caused by frequently starting the data source application.

It should be noted that, in actual application, after configuration of the data sharing system is completed, the electronic device may perform the following embodiments a plurality of times to access data, and the data sharing system does not need to be configured each time data is accessed. Alternatively, in some other implementations, configuration of the data sharing system has been completed before the electronic device is delivered from a factory. After the electronic device is powered on, the data sharing system does not need to be configured.

In some embodiments, the data producer is used to provide data such as display data and a display template of a widget, and publish the data to the data proxy service. In this way, subsequently, the data is managed by the data proxy service that resides at a service layer, and the data consumer can directly access the data by using the data proxy service, thereby avoiding frequent wakeup of the data producer. As shown in FIG. 7, the data producer includes the data provider used to provide the display data and the widget provider used to provide the display template. Through unified data proxy, a lifecycle of the data provider is decoupled from a lifecycle of the widget provider, to implement widget refresh without depending on the data producer.

In some embodiments, the data sharing system may further include shared storage space. The shared storage space may be used to implement cross-application and cross-process communication, for example, implement communication between the data consumer and the data proxy service, and implement communication between the data producer and the data proxy service. The data producer may store, in the shared storage space, data that needs to be sent to the data consumer, and the data proxy service obtains, from the shared storage space, the data published by the data producer, to refresh a widget displayed by the data consumer. For example, the data sharing system includes a database shown in FIG. 7. It may be understood that, in actual application, the cross-application and cross-process communication may alternatively be implemented in another manner, and does not necessarily depend on the shared storage space.

For example, as shown in FIG. 7, the data proxy service provides a software development kit (software development kit, SDK) interface for the application at the application layer, and the data producer may publish data by invoking the SDK interface. After receiving the data published by the data producer, the data proxy service may manage the data. For example, the data proxy service may manage data permission, a subscriber, and a lifecycle. The data permission is defined by the data producer, a data subscriber is a data consumer (for example, a widget owner) that subscribes to corresponding data, and the lifecycle management includes management of a lifecycle of a widget. In a data publishing process, the data producer may indicate a uniform resource identifier (uniform resource identifier, URI) of published data, and the data proxy service may directly access the corresponding data in the database based on the URI. The data includes persistent data and process data. The persistent data includes, for example, data with a low update frequency such as a calendar and a contact, and the process data includes, for example, data with a high update frequency such as a step count and weather.

It may be understood that the structure shown in this embodiment of this application does not constitute a specific limitation on the data proxy service. In some other embodiments of this application, the data proxy service may include more or fewer modules than those shown in the figure, or a combination of some modules, or splits from some modules, or a different module layout.

Optionally, in the data publishing process, the data provider may be used to configure a data identifier, read/write permission, and data source information of the data.

In some embodiments, the electronic device may include a plurality of applications, and the electronic device may allocate corresponding storage space to each application. The storage space may be used to store data of an application corresponding to the storage space. To ensure data security, data of different applications is isolated from each other by using a sandbox or in another manner, so that data of an application cannot be directly accessed by another application. The access herein includes operations such as data adding, deleting, modifying, and querying. To provide richer experience for a user, data may need to be shared between different applications. For example, the calendar application stores the calendar data set by the user, and the meeting application may access the calendar data to add or delete a corresponding meeting schedule. Optionally, the calendar application may configure permission of the calendar data, for example, whether the meeting application is allowed to write a new meeting schedule into the calendar data.

In some embodiments, to ensure security of cross-application access, the data proxy service may provide the SDK for the application. After the data producer publishes the data to the data proxy service, another application may access the data published by the data producer through the SDK of the data proxy service.

For example, the following provides an example of data published by a data provider. The data identifier is used to identify a corresponding data source, for example, a URI (for example, "meeting") of the data. The read/write permission of the data indicates read permission and write permission of the data source. For example, a data consumer with the read permission can read a corresponding data source. An application with the write permission can modify a data source and trigger a corresponding data consumer to access modified data source. The data source information ("metadata") indicates information such as a database path for storing the data source, a data source type (for example, persistent data or process data), and a data source name.

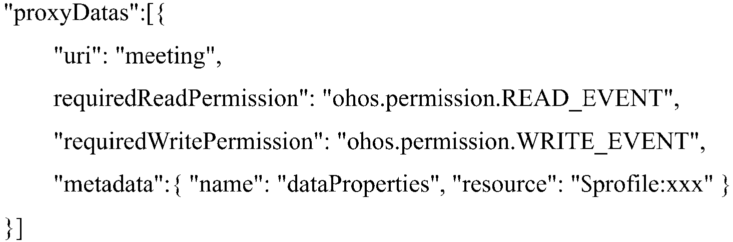

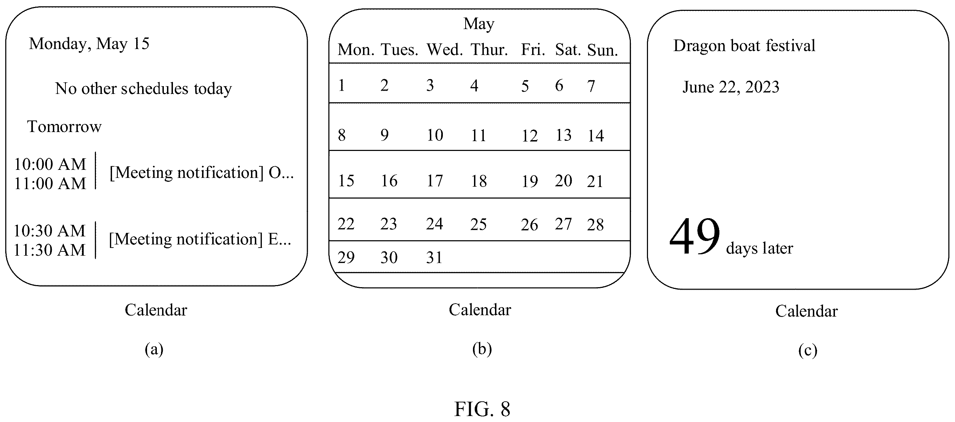

Optionally, in the data publishing process, the widget provider may be used to configure the display template of the data. For example, the following provides an example of data published by a widget provider. The data identifier corresponds to a data identifier in data published by a data provider, and the data proxy service may determine corresponding data source information based on the data identifier, to read the corresponding data. Then, the data proxy service may match the obtained data with a display template, and a data consumer may subscribe to matched widget display data, to display a widget. The display template is usually in an xml format or another format, and indicates a display format and a display parameter of the widget. For example, the widget provider configures, by using the display template, layout information displayed on the widget, for example, information such as a component displayed on the widget and a component display location is included. The data proxy service matches the layout information with the data identifier, so that the component can be subsequently displayed at a corresponding location of the widget. For example, for a calendar widget shown in (a) in FIG. 8, the data proxy service determines layout information of the calendar widget, and determines a data identifier corresponding to a date displayed on the calendar widget and data identifiers corresponding to meeting reminders.

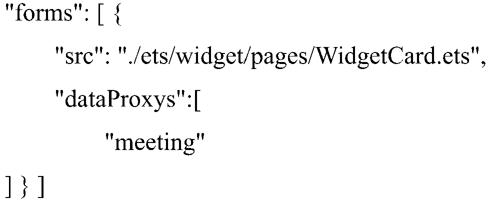

In some embodiments, after obtaining the data published by the data provider and the data published by the widget provider and matching the data, the data proxy service may configure a corresponding widget ID. Subsequently, the widget management service may query matched data based on a corresponding widget ID, and send the data to the data consumer, to display a widget. Optionally, the widget ID may alternatively be configured by the widget provider. Subsequently, the data proxy service determines a corresponding display template based on a widget ID sent by the widget management service, determines a data identifier of data required by the display template, and then reads corresponding widget display data from the database, to refresh and display a widget.

For example, as shown in FIG. 7, the widget management service determines that the calendar widget displayed on the home screen needs to be refreshed, and may send a calendar widget ID to the data proxy service. For example, if the electronic device detects a sliding operation performed by the user on the home screen, and determines that a to-be-displayed interface includes the calendar widget, the home screen may send a widget display request to the widget management service, and carry the calendar widget ID in the widget display request. In this case, the widget management service may forward, to the data proxy service, the widget display request that carries the calendar widget ID. Correspondingly, the data proxy service determines, based on the calendar widget ID, a data identifier indicated in a corresponding display template, reads corresponding data from the database based on the data identifier, generates widget display data based on the read data and the display template, and feeds back the widget display data to the widget management service. Then, the widget management service may send the obtained widget display data to the data consumer, and the data consumer may display the widget based on the obtained widget display data.

In this way, because the data proxy service has the permission to reside in the electronic device, the data proxy service does not need to be started or stopped. This avoids power consumption and performance generated by lifecycle management and device resource allocation and reclamation of the data producer that are caused by frequently starting the data producer. In addition, data of a plurality of data producers can be accessed by using one data proxy service. This further avoids the power consumption and the performance generated by the lifecycle management and the device resource allocation and reclamation of the plurality of data producers that are caused by starting the plurality of data producers. Furthermore, if an application carries a malicious file like a Trojan virus or a virus, damage caused to the electronic device when the application is started may be far greater than damage caused to the electronic device by data of the application. In this case, unified access proxy is provided by the data proxy service, so that damage that may be caused to the electronic device by the data producer can be reduced, and a risk of a malicious attack on the electronic device is reduced. This further ensures performance of the electronic device.

In some embodiments, the data proxy service can reside in the electronic device. Therefore, provided that the data consumer obtains identity information of the data proxy service, the data consumer can communicate with the data proxy service based on the identity information at any moment, to improve access efficiency.

In some embodiments, when the data proxy service receives the widget display request forwarded by the widget management service, the data proxy service performs connection authentication on the data consumer, to ensure that the data consumer on which the connection authentication succeeds has permission to connect to the data proxy service and/or the data producer; and performs access authentication on the data consumer, to ensure that the data consumer on which the access authentication succeeds has permission to access the data proxy service and/or the data producer. The connection authentication and the access authentication are performed on the data consumer, so that data access security can be ensured.

In some examples, when the data proxy service performs connection authentication on the data consumer, the data proxy service may detect whether a configuration file of the data consumer includes first permission information. If the configuration file of the data consumer includes the first permission information, it may be determined that the connection authentication succeeds; otherwise, it is determined that the connection authentication fails. For example, the first permission information may indicate that the data consumer has the permission to connect to the data proxy service.

It should be noted that the first permission information may be added by a developer of the data consumer to the configuration file of the data consumer in advance. Certainly, the data consumer may alternatively obtain the first permission information in another manner, and add the first permission information to the configuration file. A manner in which the data consumer obtains the first permission information is not limited in embodiments of this application.

In some examples, when the data proxy service performs access authentication on the data consumer, the data proxy service may detect whether a configuration file of the data consumer includes second permission information, and whether a configuration file of the proxy service includes third permission information corresponding to the second permission information. The second permission information may be used to declare the permission to access the proxy service, and the third permission information may indicate that the proxy service defines the permission declared by the second permission information. If the second permission information and the third permission information are detected, it may be determined that the access authentication on the data consumer succeeds; otherwise, it is determined that the access authentication on the data consumer fails.

It should be understood that the data proxy service may alternatively perform connection authentication and access authentication in another manner.

In addition, that the data proxy service performs connection authentication and access authentication on the data consumer is an optional step. To be specific, the data proxy service may not perform connection authentication and/or access authentication on the data consumer. The connection authentication and/or the access authentication are/is omitted, so that the access efficiency can be improved.

In some embodiments, a same widget may have a plurality of display styles. For example, as shown in (a), (b), and (c) in FIG. 8, the calendar widget has a plurality of different display styles, and the different display styles may correspond to different data processing templates. When adding the calendar widget, the widget provider may generate a corresponding data processing template based on a display template corresponding to the calendar widget and a display style of the calendar widget that is being added, and configure a corresponding ID of the data processing template. Correspondingly, in a widget subscription process, the widget management service may send a corresponding widget ID and the ID of the data processing template to the data proxy service, so that the data proxy service can determine the corresponding calendar widget and the corresponding data processing template, to display a required widget.

Optionally, as described above, the display template indicates the layout information of the widget and the data source information for implementing the layout information. In this case, a plurality of data processing templates may be configured for each piece of data indicated by the data source information in the display template of the same widget, to implement different display styles of the same widget. For example, the widget provider of the calendar widget may obtain schedule data provided by the data provider, to add a corresponding calendar widget. The calendar widget may display a schedule of today, or may display a schedule of tomorrow, and a corresponding data source is a piece of schedule data provided by the data provider. In this case, in a process of generating a widget, the widget provider may configure a data processing template corresponding to the widget, and then configure a query condition corresponding to each data processing template. The query condition indicates a condition for querying the data source for required data. For example, the widget provider configures a query condition of the data processing template corresponding to the calendar widget as a timestamp range of today or tomorrow.

For example, as shown in (a) in FIG. 8, the calendar widget is used to display schedules of today and tomorrow. In this case, in a process of publishing data of the calendar widget, a calendar application configures a corresponding data processing template 1, and a corresponding query condition 1 is to query for schedule data in a timestamp range from today to tomorrow in schedule data. For another example, as shown in (b) in FIG. 8, the calendar widget is used to display a calendar of a current month. In this case, in a process of publishing the data of the calendar widget, the calendar application configures a corresponding data processing template 2, and a corresponding query condition 2 is to query for date data in a timestamp range of a current month in the schedule data. For another example, as shown in (c) in FIG. 8, the calendar widget is used to display latest holiday information. In this case, in a process of publishing the data of the calendar widget, the calendar application configures a corresponding data processing template 3, and a corresponding query condition 3 is to query, in the schedule data, holiday data closest to a current timestamp. In other words, the calendar widget corresponds to three data processing templates. In response to a user operation, the electronic device may display the calendar widget, so that the data consumer can determine the data processing template used to display the current calendar widget.

Correspondingly, as shown in FIG. 7, in the widget refresh process, the widget management service may send, to the data proxy service, the calendar widget ID and an ID of a data processing template corresponding to a to-be-displayed widget. The data proxy service determines, based on the calendar widget ID, a data identifier indicated in the corresponding display template, and determines a corresponding query condition based on the ID of the data processing template, to read corresponding data from the database based on the data identifier and the query condition, and feed back the read data to the widget management service. Then, the widget management service may send the obtained data to the data consumer, and the data consumer may refresh and display the widget based on the obtained data.

In some embodiments, in a process of adding or editing the widget, the widget provider may configure a corresponding scheduler (scheduler) in the data processing template. The scheduler is a structured query language (structured query language, SQL), and is used to preset a service processing function. Based on the scheduler, the data proxy service may trigger a data notification, for example, trigger the widget management service to refresh display of the widget.

For example, if the calendar widget configured by the calendar application displays a schedule reminder, in a process of configuring the data processing template, the calendar application may configure a corresponding scheduler, to trigger, at corresponding reminder time, the data proxy service to notify the widget management service to refresh and display the calendar widget.

For example, the following is an example of an SQL statement corresponding to a configured scheduler in a calendar widget display scenario. The scheduler is used to perform data notification at specified time, to implement scheduled notification of a schedule. For example, the scheduler performs notification when latest time is found in time that meets a condition. For example, when a schedule that is immediately started or is in progress is found, widget refresh is triggered. In addition, at 18:00 p.m. every day, a schedule in a timestamp range from current time to 23:59 p.m. on a next day is trigged to be notified, for example, a schedule whose start time or end time is in the current timestamp range.

```
         SELECT MIN(min_time), reminderTimer(min_time) FROM (
              SELECT MIN(BEGIN_TIME) as min_time FROM TABLENAME WHERE
 Before
              UNION
              SELECT MIN(END_TIME) as min_time FROM TABLENAME WHERE
 Between
              UNION
              SELECT (CASE WHEN datetime('now','localtime') < 18:00 THEN 18:00 ELSE
 datetime(18:00 + 1 day) END) AS min_time
```

For another example, if a map widget configured by a map application displays an important location reminder, in a process of configuring a data processing template, the map application may configure a corresponding scheduler, to trigger, when the electronic device is located at the corresponding reminder location, the data proxy service to notify the widget management service to refresh and display the map widget.

The foregoing describes, by using the time or the location as a trigger condition of the configured scheduler, the process in which the scheduler triggers the widget to be refreshed and displayed. It should be understood that the widget provider may further configure another trigger condition of the scheduler. For example, the widget provider configures the scheduler of the data processing template to trigger a notification of widget refresh in reminder time and at an important location.

In some embodiments, the widget provider configures the corresponding scheduler in the data processing template configuration, and a trigger occasion of the scheduler may be a change of corresponding data (for example, add, delete, or modification) or completion of preset processing. For example, the calendar application adds a corresponding schedule in response to a user operation. In this case, the data proxy service may obtain the corresponding newly added schedule through triggering based on the scheduler, and trigger a notification of widget refresh at a corresponding occasion. For example, the widget provider configures, by using the scheduler, an occasion for cyclically triggering widget refresh. For example, the calendar widget triggers, at 18:00 p.m. every day, to refresh and display a schedule on a next day. In this case, after triggering refresh of the calendar widget at 18:00 p.m. based on the scheduler, the data proxy service triggers resetting of the scheduler, so that the data proxy service can trigger refresh of the calendar widget again at 18:00 p.m. on a next day based on a reset scheduler.

For example, as described above, the data provider may configure the read/write permission of the data in the data publishing process. The application may modify data on which the application has the write permission. After the data is modified, the data proxy service may determine whether to refresh a trigger occasion of a corresponding scheduler.

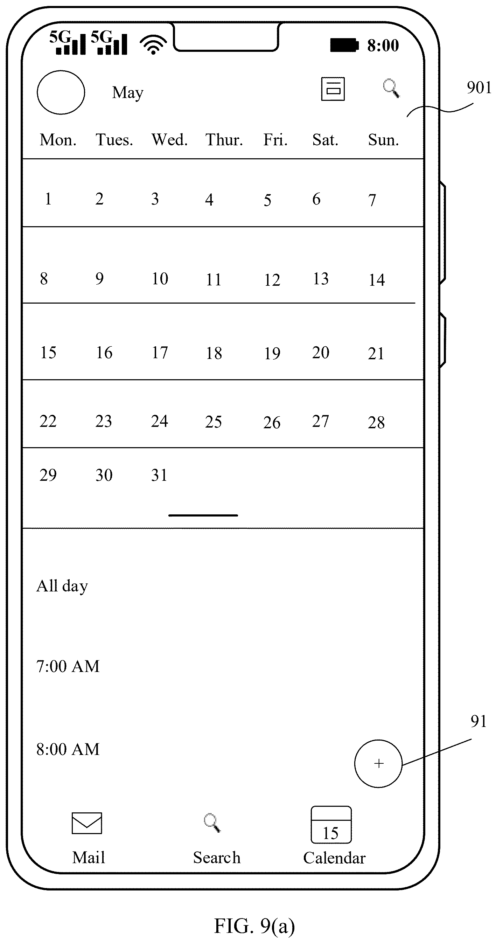

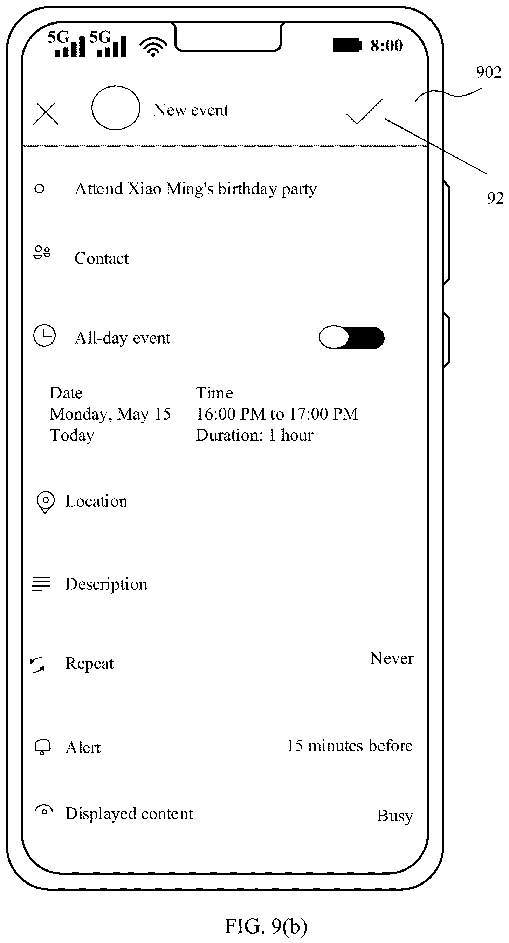

On an interface 901 shown in FIG. 9(a), in a process of displaying the calendar application, the electronic device detects an operation of tapping a schedule add control 91 by a user, determines that the user indicates to add a new schedule, and may display an interface 902 shown in FIG. 9(b). On the interface 902, the user may edit the newly added schedule. For example, time of the newly added schedule is 16:00 p.m. to 17:00 p.m. today. In response to an operation of tapping a save control 92 by the user, it is determined that creation of the schedule is completed. In this case, the calendar application may send indication information to the data proxy service, and carry a data identifier in the indication information. After receiving the indication information, the data proxy service determines a corresponding display template and a corresponding data processing template based on the data identifier, and determines whether a scheduler is configured for the data processing template. If the data processing template corresponds to a scheduler, whether the corresponding newly added data triggers corresponding widget refresh may be determined based on the data identifier.

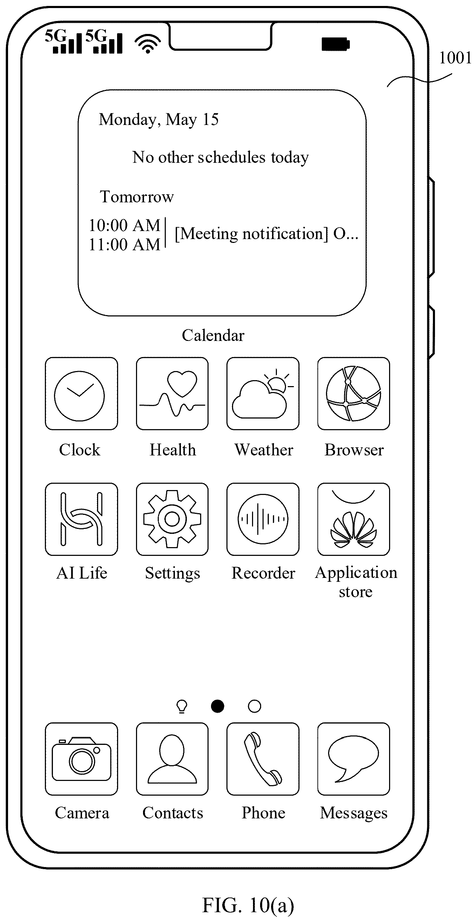

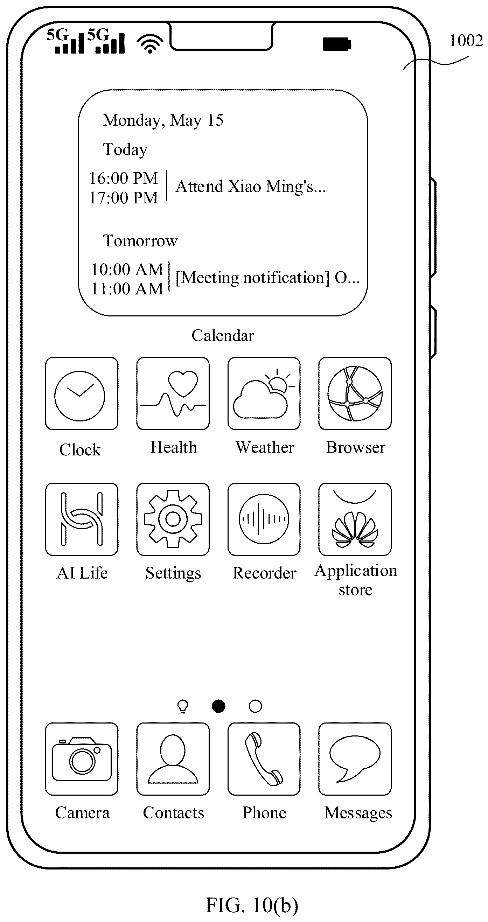

For example, as shown in FIG. 7, the data proxy service determines, based on the scheduler of the data processing template corresponding to the currently displayed calendar widget, that the newly added schedule data meets the scheduler. For example, the data proxy service determines that the scheduler triggers to notify a schedule in a timestamp range from today to tomorrow. In this case, the data proxy service may notify the widget management service to trigger widget refresh. After receiving the notification, the widget management service may send the calendar widget ID and the ID of the data processing template to the data proxy service. The data proxy service may find corresponding data based on the query condition in the ID of the data processing template. The data includes the schedule data newly added by the calendar application in response to the user operation. Then, the data proxy service may send the found data to the widget management service, and then the widget management service may send the received data to the home screen. In this case, after receiving the data, the home screen may refresh and display the calendar widget on an interface 1001 shown in FIG. 10(a) as the calendar widget on an interface 1002 shown in FIG. 10(b). The refreshed calendar widget includes the newly added schedule reminder.

In the foregoing example, an example in which both the widget provider and the data provider are the calendar application is used to describe triggering of the scheduler. It should be understood that the data proxy service provides the SDK interface for the application at the application layer. In this case, for data on which other applications have the write permission, the other applications may also modify the data through the SDK interface, and the modification on the data performed by the applications may also trigger the scheduler.

In some embodiments, the application may invoke the SDK interface of the data proxy service based on the identity information of the data proxy service, to communicate with the data proxy service. Optionally, the identity information of the data proxy service may include at least one of a process identifier, a service identifier, and a communication address that correspond to the data proxy service.

For example, an application A may send indication information to the data proxy service based on the identity information of the data proxy service. The indication information may include a data identifier of to-be-accessed data, and the data identifier may indicate a feature of the to-be-accessed data, that is, indicate the data that needs to be accessed. For example, the data identifier of the to-be-accessed data includes a URI of the to-be-accessed data. Certainly, in actual application, the data identifier may further indicate more or fewer features related to the to-be-accessed data. Specific content indicated by the data identifier is not limited in embodiments of this application.

Optionally, the indication information may further include at least one control parameter, and the at least one control parameter may be used to control a specific data access process. The at least one control parameter may be carried in the URI, or may be independent of the URI. Certainly, in actual application, the application A may alternatively send the data identifier of the to-be-accessed data and the at least one control parameter to the data proxy service by using a plurality of messages.

Optionally, the at least one control parameter includes an operation type identifier. The operation type identifier may be used to describe a specific operation manner on the to-be-accessed data, and the operation manner may be adding data, deleting data, modifying data, or querying data.

In some embodiments, after receiving the indication information sent by the application A, the data proxy service determines the corresponding to-be-accessed data based on the URI carried in the indication information, and determines, based on the control parameter in the indication information, the operation process indicated by the application A. As shown in FIG. 7, the data proxy service is used to perform permission control management on the data published by the data provider. In this case, after determining, based on the URI and the control parameter, the operation that needs to be performed on the to-be-accessed data, the data proxy service may perform authentication on the application A, to determine whether the application A has permission to perform the corresponding operation. When the application A has the permission to perform the corresponding operation, the data proxy service may perform the corresponding operation on the determined to-be-accessed data. Optionally, after performing the operation on the to-be-accessed data, the data proxy service may determine whether to trigger a corresponding scheduler. For example, if a scheduler is triggered, the data proxy service may notify the widget management service to refresh display of the corresponding widget.

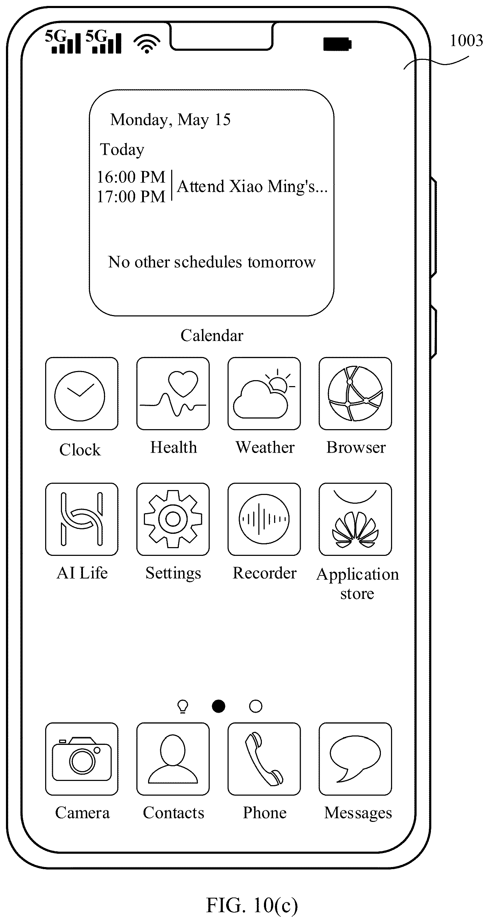

For example, a date and a meeting reminder are displayed on the calendar widget on the interface 1002 shown in FIG. 10(b). To be specific, the data provider corresponding to the calendar widget is the calendar application, and the meeting application has the write permission on the calendar data provided by the calendar application, for example, adding a meeting schedule, deleting a meeting schedule, or modifying a meeting schedule in the calendar data. For example, the electronic device determines, in response to a user operation, to cancel a meeting originally planned to be held from 10:00 a.m. to 11:00 a.m. tomorrow. In response to cancellation of the meeting, the meeting application may send indication information to the data proxy service, and carries a data identifier of calendar data and a control parameter in the indication information. Correspondingly, the data proxy service determines, based on the received indication information, that the meeting application indicates to modify the meeting schedule in the calendar data. The data proxy service determines, based on the permission configured by the calendar application in the process of publishing the calendar data, that the meeting application has the write permission on the calendar data. In this case, the data proxy service modifies the corresponding meeting schedule based on the indication information. In addition, the data proxy service determines the corresponding display template and the corresponding data processing template based on the data identifier, and may determine a scheduler corresponding to the data processing template, to determine, based on the scheduler, to notify the widget management service to refresh display of the widget. Correspondingly, the widget management service obtains latest widget display data based on the notification, and sends the latest widget display data to the home screen. Then, the home screen may refresh and display the calendar widget on an interface 1003 shown in FIG. 10(c), and the refreshed calendar widget no longer includes the canceled tomorrow meeting reminder. In this way, the lifecycle of the widget provider is decoupled from the lifecycle of the data provider, and the data proxy service provides the unified proxy for the data of the data producer.

In this way, the scheduler is configured, so that active widget refresh can be implemented by using the data proxy service without waking up the data producer, thereby reducing the power consumption of the electronic device while meeting a widget display requirement.

It should be understood that the scheduler may not be configured for data processing templates corresponding to some widgets. For example, the scheduler is not configured for a data processing template corresponding to a music widget, and the data proxy service determines, based on a configuration status of the scheduler, whether to actively trigger widget refresh.

In some embodiments, the data proxy service is further used to perform lifecycle management on the widget.

In some examples, after determining that a new widget is added, the electronic device may trigger a corresponding data consumer (for example, the home screen or the leftmost screen) to subscribe to the corresponding widget from the data proxy service by using the widget management service. In a widget creation process, the data producer has configured a corresponding widget ID and a corresponding ID of a data processing template in the data proxy service. In this case, after receiving a subscription requirement, the data proxy service may determine the widget ID and the ID of the data processing template of the newly added widget, to feed back corresponding widget display data. Optionally, the data proxy service may further determine a scheduler corresponding to the newly added widget, to trigger widget refresh.

In some examples, the electronic device deletes, in response to a user operation, a widget that is being displayed. In this case, the data consumer may indicate, by using the widget management service, the data proxy service to cancel subscription to the corresponding widget. In this case, after receiving subscription cancellation indication, the data proxy service may determine a widget ID and an ID of a data processing template that correspond to the widget to which subscription is canceled, and subsequently no longer trigger sending of corresponding widget display data. For example, the data proxy service determines, based on the ID of the data processing template, that the widget to which subscription is canceled corresponds to a scheduler, and may determine not to trigger an active notification to refresh display of the widget subsequently. Optionally, deleting a widget that is being displayed includes, for example, in response to a sliding operation performed by the user on the home screen or the leftmost screen, the electronic device determines that the widget is no longer displayed on an interface presented after the sliding. In this case, the home screen or the leftmost screen may cancel subscription to the widget.

In some examples, the electronic device determines, in response to a user operation, to completely clear a widget. In this case, the widget management service may send indication information to the widget provider, to indicate to delete corresponding widget data, for example, including a display template and a data processing template. After deleting the display template and the data processing template, the widget provider sends indication information to the data proxy service. The indication information may carry a widget ID, an ID of the data processing template, and the like. After receiving the indication information, the data proxy service may clear, based on the widget ID and the ID of the data processing template that are carried, information configured by the widget provider and information configured by the data provider for the widget that is currently indicated to be cleared, to avoid subsequently triggering display data invoking of the cleared widget.

Optionally, the widget provider may further send indication information to the data provider, and the data provider determines, based on the indication information, whether data corresponding to the currently cleared widget is used only to display the widget. If the data corresponding to the currently cleared widget is used only to display the widget, the data provider can delete the corresponding data from the database. Otherwise, the data provider may retain the corresponding data in the database.

In this way, life cycle management is performed on the widget by using the data proxy service. When the widget is displayed or the display of the widget is canceled, the data producer does not need to be woken up, thereby effectively reducing the power consumption of the electronic device.

In some experimental examples, in an existing widget refresh process, power consumption required for refreshing one widget at a time is about 0.02 milliampere-hour to 0.3 milliampere-hour (mAh); start of a single process causes an increase of about over 20 megabytes (MB) in memory usage; and if data is from a cloud server, a network request further needs to be made, and power consumption required for a single network request is about 0.01 mAh to 0.02 mAh. However, according to the data access method provided in embodiments of this application, the data proxy service provides unified proxy for the data producer. In the widget refresh process, power consumption of refreshing one widget at a time is reduced by about 0.015 mAh to 0.02 mAh, peak memory is reduced by about 25 MB to 30 MB, and a widget refresh delay is shortened by 230 milliseconds to 300 milliseconds (ms).

It can be learned that, according to the data access method provided in embodiments of this application, widget display performance of the electronic device can be effectively improved.

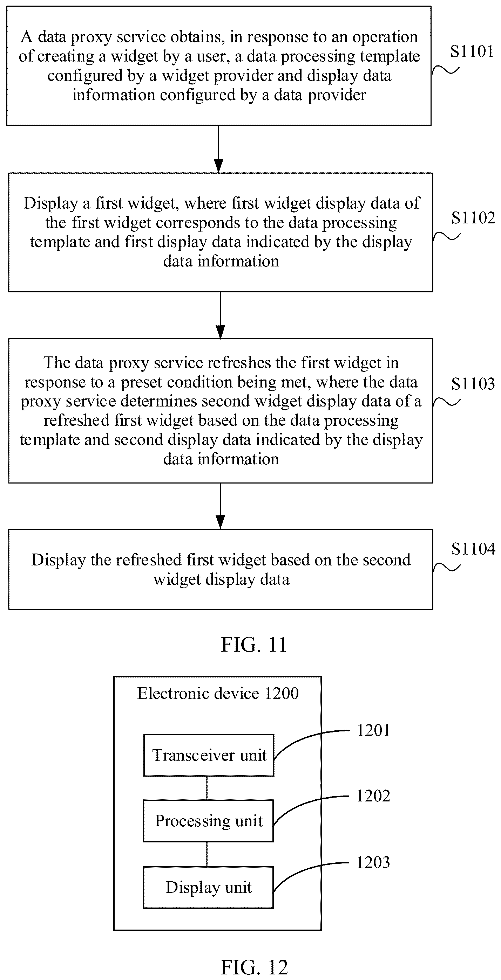

For example, FIG. 11 is a schematic flowchart of a data access method according to an embodiment of this application. As shown in FIG. 11, the method includes the following steps.

S1101: A data proxy service obtains, in response to an operation of creating a widget by a user, a data processing template configured by a widget provider and display data information configured by a data provider.

The data proxy service has permission to reside in an electronic device.

In some embodiments, in response to the operation of creating the widget by the user, the widget provider configures a data processing template corresponding to a first widget, and the data provider configures display data information corresponding to display data accessed by the first widget. Then, the widget provider sends the data processing template to the data proxy service, and the data provider sends the display data information to the data proxy service.

Optionally, the display data information includes a data identifier, read/write permission, and data source information of the display data configured by the data provider.

Optionally, the widget provider is further used to configure a display template corresponding to the first widget, where the display template includes a data identifier and layout information of the display data corresponding to the first widget, and the display template includes data processing templates that are of one or more styles and that correspond to the first widget.

For example, the widget provider determines to create a widget in response to a creation operation of the user. The creation of the widget may be creating a widget that is not displayed by a widget consumer. For example, in response to an operation of creating a widget on a home screen by the user, a calendar application creates the calendar widget shown in (a) in FIG. 8. Alternatively, the creation of the widget may be creating another style of the widget other than a widget style displayed by a widget consumer. For example, when the calendar widget shown in (a) in FIG. 8 is displayed on the home screen, in response to the operation of creating the widget on the home screen by the user, the calendar application creates another style of calendar widget shown in (b) in FIG. 8.

In a widget creation process, the widget provider (for example, the calendar application) configures the display template of the widget, for example, including a data identifier and layout information of to-be-displayed widget data. The data provider (for example, the calendar application) configures the display data information of the widget, for example, including a data identifier and read/write permission of the display data of the to-be-displayed widget. Optionally, the data identifier is, for example, a URI of the display data, and indicates a storage location of the display data.

Optionally, after the widget is created, a data consumer may display the widget. In addition, after widget configuration is completed, the data proxy service may obtain the display template and the widget display information that are published by a data producer (for example, including the widget provider and the data provider).

For example, as shown in FIG. 7, the data producer, the data proxy service, and the data consumer form the data sharing system. The data producer is used to provide data such as the display data and the display template of the widget, and publish the data to the data proxy service. In this way, subsequently, the data is managed by the data proxy service that resides at a service layer, and the data consumer can directly access the data by using the data proxy service, thereby avoiding frequent wakeup of the data producer. Through unified data proxy, a lifecycle of the data provider is decoupled from a lifecycle of the widget provider, to implement widget refresh without depending on the data producer.

S1102: The electronic device displays the first widget, where first widget display data of the first widget corresponds to the data processing template and first display data indicated by the display data information.

In some embodiments, in the widget creation process, the widget provider creates a data processing template corresponding to a to-be-displayed widget style, and determines first display data that needs to be accessed by the data processing template. The first display data is a part or all of display data that is provided by the data provider and that is to be accessed by the widget. The electronic device may determine, based on layout information that is of the to-be-displayed widget style and that is indicated by the data processing template and the first display data indicated by display data information, the first display data of the to-be-displayed widget, to display a widget.

For example, in response to an operation of creating a calendar widget on the home screen by the user, the widget provider creates a display template of the calendar widget. The display template indicates a data identifier of display data of the calendar widget and layout information of the display data. The data provider configures display data information of calendar data corresponding to the calendar widget, for example, including a data identifier and read/write permission. As shown in FIG. 8, the electronic device may display calendar widget of a plurality of styles. In this case, the widget provider may configure a plurality of data processing templates corresponding to same calendar data (namely, same display data information), and the display template includes the plurality of data processing templates. Then, the electronic device may generate first widget display data based on a data processing template corresponding to a style of the calendar widget currently selected by the user for creation and first display data indicated by display data information, to display a first widget.

S1103: The data proxy service refreshes the first widget in response to a preset condition being met, where the data proxy service determines second widget display data of a refreshed first widget based on the data processing template and second display data indicated by the display data information.

In a widget refresh process, the electronic device does not run the widget provider and/or the data provider.

In some embodiments, in step S1101, in the widget creation process, the widget provider and the data provider have released related data of the widget to the data proxy service. In this case, in a subsequent widget refresh process, in response to the preset condition determined to be met, the data proxy service can directly obtain the related data, and does not need to start the widget provider and the data provider. Therefore, the lifecycle of the widget provider is decoupled from the lifecycle of the data provider, and power consumption generated by frequently waking up the widget provider and the data provider for widget refresh is reduced.

In some embodiments, the data processing template includes a query condition, and the query condition is used by the data proxy service to query the display data indicated by the display data information for the second display data.

For example, as shown in FIG. 8, a same calendar widget has different display styles, and the widget of different styles may correspond to different data processing templates. The data proxy service queries the display data indication information for corresponding display data based on the query condition carried in the data processing template, to refresh and display a widget of a corresponding style.

For example, as shown in (a) in FIG. 8, the calendar widget is used to display schedules of today and tomorrow. In this case, in a process of publishing the data of the calendar widget, the calendar application configures a corresponding data processing template 1, and a corresponding query condition 1 is to query for schedule data in a timestamp range from today to tomorrow in schedule data. Subsequently, when refreshing the calendar widget shown in (a) in FIG. 8, the data proxy service may find, based on the query condition 1, the calendar data (for example, the second display data) in the timestamp range from today to tomorrow in the calendar data indicated by the display data information. Then, the data proxy service refreshes and displays the calendar widget shown in (a) in FIG. 8 based on the found second display data and the data processing template 1.

In some embodiments, the preset condition includes: The data proxy service receives a first indication for modifying display data indicated by the display data information. Alternatively, the data proxy service determines that a refresh occasion is met. Alternatively, the data proxy service receives a second indication that is of a widget owner and that indicates to refresh the first widget, where the widget owner is used to display the first widget.

In some examples, the data proxy service generates the second widget display data based on the second display data and the data processing template, where the data processing template indicates layout information of the second display data.

For example, the meeting reminder is displayed on the calendar widget on the interface 1002 shown in FIG. 10(b). To be specific, the data provider corresponding to the calendar widget is the calendar application, and the meeting application has the write permission on the calendar data provided by the calendar application, for example, adding a meeting schedule, deleting a meeting schedule, or modifying a meeting schedule in the calendar data. For example, the electronic device determines, in response to a user operation, to cancel a meeting originally planned to be held from 10:00 a.m. to 11:00 a.m. tomorrow. In response to cancellation of the meeting, the meeting application may send a first indication to the data proxy service, and carries a data identifier of calendar data and a control parameter in the first indication. Correspondingly, the data proxy service determines, based on the received first indication, that the meeting application indicates to modify a meeting schedule in the calendar data indicated by display data information corresponding to the calendar widget. The data proxy service determines, based on the permission configured by the calendar application in the process of publishing the calendar data, that the meeting application has the write permission on the calendar data. In this case, the data proxy service modifies the corresponding meeting schedule based on the first indication. Then, based on modification of the meeting schedule, the data proxy service may generate second widget display data of the calendar widget based on widget layout information indicated by a data processing template corresponding to the currently displayed calendar widget and second display data (namely, modified schedule data) indicated by the display data information, to trigger refresh of the calendar widget displayed on the interface 1002, for example, display the refreshed calendar widget shown in FIG. 10(c).

For another example, the data processing template further includes a scheduler, and the scheduler is used to enable the data proxy service to determine whether the refresh occasion is met. For example, the widget provider configures, by using the scheduler, an occasion for cyclically triggering widget refresh. For example, the calendar widget triggers, at 18:00 p.m. every day, to refresh and display a schedule on a next day. In this process, in response to the refresh occasion indicated by the scheduler, the data proxy service determines that the preset condition is met, rereads corresponding second display data based on the display data information, matches the second display data based on layout information indicated by a data processing template corresponding to the displayed widget, determines second widget display data, and refreshes and displays the widget. Optionally, after triggering refresh of the calendar widget at 18:00 p.m. based on the scheduler, the data proxy service triggers resetting of the scheduler, so that the data proxy service can trigger refresh of the calendar widget again at 18:00 p.m. on a next day based on a reset scheduler.

For another example, in a process of displaying a first interface of the home screen, the electronic device detects a sliding operation of the user, and determines that the user indicates to display a second interface of the home screen. If the to-be-displayed second interface includes a first widget that does not exist on the first interface, the home screen (namely, the widget owner) may send a second indication to the data proxy service, and carry, in the second indication, a widget ID of the first widget and an ID of a data processing template corresponding to a style of the to-be-displayed first widget. Correspondingly, after receiving the second indication, the data proxy service may determine that the preset condition is met. In this case, the data proxy service obtains a display template corresponding to the widget ID and the data processing template corresponding to the ID of the data processing template, determines a URI indicated by an ID of the display template, to determine corresponding display data information, and queries, based on a query condition carried in the data processing template, display data indicated by the display data information for second display data. Then, the data proxy service matches the data processing template with the second display data, to obtain second widget display data, and feeds back the second display data to the widget owner, to trigger widget refresh, for example, displaying the first widget on the second interface.

In this way, widget refresh is triggered in a plurality of manners, and the widget provider and the data provider do not need to be woken up in the widget refresh process, thereby effectively reducing power consumption and improving performance of the electronic device.

In some embodiments, the data proxy service is further used to provide a data storage service for the data provider, the data proxy service includes a data directory corresponding to the data provider, and the display data information includes the data directory. In this case, the data proxy service determines a storage location of the second display data based on the data directory in response to the preset condition being met. The data proxy service obtains the second display data based on the storage location.

Optionally, the data proxy service may be a sub-service in a distributed data management service. Certainly, in actual application, the data proxy service may alternatively be another system service associated with the distributed data management service.

For example, as shown in FIG. 7, in a process in which the data producer publishes data, the data proxy service may obtain the data directory of the display data, to implement storage management of the display data. Therefore, in the subsequent widget refresh process, the data proxy service can directly obtain, based on the data directory, display data stored in a corresponding storage location. In this way, the display data can be obtained without waking up the data provider, thereby effectively reducing a wakeup frequency of the data provider, and reducing the power consumption of the device.

In some other embodiments, the electronic device further includes a system service, the system service is further used to provide a data storage service for the data provider, and the system service includes a data directory corresponding to the data provider. In this case, the data proxy service obtains the data directory from the system service in response to the preset condition being met. Then, the data proxy service determines a storage location of the second display data based on the data directory. The data proxy service obtains the second display data based on the storage location.

Optionally, the system service is, for example, a distributed data management service, and the distributed data management service and the data proxy service may be two independent system services.

For example, when determining that display of the widget needs to be refreshed when the preset condition is met, the data proxy service may request, from the distributed data management service, to obtain the data directory corresponding to the to-be-displayed widget, to obtain the second display data based on the storage location indicated by the data directory. In this way, in the widget refresh process, the display data can be obtained without waking up the data provider, thereby effectively reducing the wakeup frequency of the data provider, and reducing the power consumption of the device.

S1104: The electronic device displays the refreshed first widget based on the second widget display data.

In some embodiments, after determining the second display data, the data proxy service may send the second display data to the widget owner, to refresh the first widget displayed by the widget owner.

In this way, because the data proxy service has the permission to reside in the electronic device, the data proxy service does not need to be started or stopped. This avoids power consumption and performance generated by lifecycle management and device resource allocation and reclamation of the data producer that are caused by frequently starting the data producer in the widget refresh process.

In addition, data of a plurality of data producers can be accessed by using one data proxy service (for example, display data in one widget corresponds to a plurality of data producers). This further avoids the power consumption and the performance generated by the lifecycle management and the device resource allocation and reclamation of the plurality of data producers that are caused by starting the plurality of data producers.

Furthermore, if an application carries a malicious file like a Trojan virus or a virus, damage caused to the electronic device when the application is started may be far greater than damage caused to the electronic device by data of the application. In this case, unified access proxy is provided by the data proxy service, so that damage that may be caused to the electronic device by the data producer can be reduced, and a risk of a malicious attack on the electronic device is reduced. This further ensures performance of the electronic device.

The foregoing describes in detail the data access method provided in embodiments of this application with reference to FIG. 7 to FIG. 11. The following describes in detail the electronic device provided in embodiments of this application with reference to FIG. 12.

In a possible design, FIG. 12 is a diagram of a structure of an electronic device according to an embodiment of this application. As shown in FIG. 12, the electronic device 1200 includes a transceiver unit 1201, a processing unit 1202, and a display unit 1203. The electronic device 1200 may be configured to implement a function of the electronic device in the foregoing method embodiments.

Optionally, the transceiver unit 1201 is configured to support the electronic device 1200 in performing S1101 in FIG. 11.

Optionally, the processing unit 1202 is configured to support the electronic device 1200 in performing S1102 and S1103 in FIG. 11.

Optionally, the display unit 1203 is configured to support the electronic device 1200 in displaying a widget, and/or support the electronic device 1200 in performing S1102 and S1104 in FIG. 11.

The transceiver unit may include a receiving unit and a sending unit, may be implemented by a transceiver or a transceiver-related circuit component, and may be a transceiver or a transceiver module. Operations and/or functions of the units in the electronic device 1200 are separately used to implement corresponding procedures of the data access method in the foregoing method embodiments. All related content of the steps in the foregoing method embodiments may be cited in function descriptions of corresponding functional units. For brevity, details are not described herein again.

Optionally, the electronic device 1200 shown in FIG. 12 may further include a storage unit (not shown in FIG. 12), and the storage unit stores a program or instructions. When the transceiver unit 1201, the processing unit 1202, and the display unit 1203 execute the program or the instructions, the electronic device 1200 shown in FIG. 12 is enabled to perform the data access method in the foregoing method embodiments.

For technical effect of the electronic device 1200 shown in FIG. 12, refer to technical effect of the data access method in the foregoing method embodiments. Details are not described herein again.

In addition to a form of the electronic device 1200, the technical solutions provided in this application may also be a functional unit or a chip in the electronic device, or an apparatus used in combination with the electronic device.

An embodiment of this application further provides a chip system, including a processor. The processor is coupled to a memory, and the memory is configured to store a program or instructions. When the program or the instructions are executed by the processor, the chip system is enabled to implement the method in any one of the foregoing method embodiments.

Optionally, there may be one or more processors in the chip system. The processor may be implemented by hardware or software. When the processor is implemented by hardware, the processor may be a logic circuit, an integrated circuit, or the like. When the processor is implemented by software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a computer-readable storage medium. The computer-readable storage medium stores a computer program. When the computer program is run on a computer, the computer is enabled to perform the foregoing related steps, to implement the data access method in the foregoing embodiments.

An embodiment of this application further provides a computer program product. When the computer program product runs on a computer, the computer is enabled to perform the foregoing related steps, to implement the data access method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by one or more processors, the apparatus is enabled to perform the data access method in the foregoing method embodiments.

The apparatus, the computer-readable storage medium, the computer program product, or the chip provided in embodiments of this application is configured to perform the corresponding method provided above. Therefore, for beneficial effect that can be achieved, refer to beneficial effect in the corresponding method provided above. Details are not described herein again.

Methods or algorithm steps described with reference to content disclosed in embodiments of this application may be implemented by hardware, or may be implemented by a processor executing software instructions. The software instructions may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an application-specific integrated circuit (application-specific integrated circuit, ASIC).

Based on the foregoing descriptions of the implementations, a person skilled in the art may clearly understand that, for ease and brevity of description, division into the foregoing functional modules is merely used as an example for description. In actual application, the foregoing functions can be allocated to different functional modules and implemented as required, that is, an inner structure of an apparatus is divided into different functional modules to implement all or some of the functions described above. For a detailed working process of the foregoing system, apparatus, and unit, refer to a corresponding process in the foregoing method embodiments. Details are not described herein again.

In the several embodiments provided in this application, it should be understood that the disclosed methods may be implemented in other manners. The apparatus embodiment described above is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

The computer-readable storage medium includes but is not limited to any one of the following: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A data access method, applied to an electronic device, wherein the electronic device comprises a data proxy service, the data proxy service has permission to reside in the electronic device, and the method comprises:
obtaining, by the data proxy service in response to an operation of creating a widget by a user, a data processing template configured by a widget provider and display data information configured by a data provider;
displaying a first widget, wherein first widget display data of the first widget corresponds to the data processing template and first display data indicated by the display data information;
refreshing, by the data proxy service, the first widget in response to a preset condition being met, wherein the data proxy service determines second widget display data of a refreshed first widget based on the data processing template and second display data indicated by the display data information; and
displaying the refreshed first widget based on the second widget display data.

2. The method according to claim 1, wherein in a widget refresh process, the electronic device does not run the widget provider and/or the data provider.

3. The method according to claim 1 or 2, wherein the preset condition comprises:
the data proxy service receives a first indication for modifying display data indicated by the display data information; or
the data proxy service determines that a refresh occasion is met; or
the data proxy service receives a second indication that is of a widget owner and that indicates to refresh the first widget, wherein the widget owner is used to display the first widget.

4. The method according to any one of claims 1 to 3, wherein obtaining, by the data proxy service in response to the operation of creating the widget by the user, the data processing template configured by the widget provider and the display data information configured by the data provider comprises:
in response to the operation of creating the widget by the user, configuring, by the widget provider, the data processing template corresponding to the first widget, and configuring, by the data provider, the display data information corresponding to display data accessed by the first widget; and
sending, by the widget provider, the data processing template to the data proxy service, and sending, by the data provider, the display data information to the data proxy service.

5. The method according to any one of claims 1 to 4, wherein the data processing template comprises a query condition, and the query condition is used by the data proxy service to query the display data indicated by the display data information for the second display data.

6. The method according to claim 5, that the data proxy service determines the second widget display data of the refreshed first widget based on the data processing template and the second display data indicated by the display data information comprises:
generating, by the data proxy service, the second widget display data based on the second display data and the data processing template, wherein the data processing template indicates layout information of the second display data.

7. The method according to any one of claims 1 to 6, wherein the data processing template further comprises a scheduler, and the scheduler is used to enable the data proxy service to determine whether the refresh occasion is met.

8. The method according to any one of claims 1 to 7, wherein the display data information comprises a data identifier, read/write permission, and data source information of the display data configured by the data provider.

9. The method according to any one of claims 1 to 8, wherein the widget provider is further used to configure a display template corresponding to the first widget, wherein the display template comprises a data identifier and layout information of the display data corresponding to the first widget, and the display template comprises data processing templates that are of one or more styles and that correspond to the first widget.

10. The method according to any one of claims 1 to 9, wherein the data proxy service is further used to provide a data storage service for the data provider, the data proxy service comprises a data directory corresponding to the data provider, the display data information comprises the data directory, and refreshing, by the data proxy service, the first widget in response to the preset condition being met comprises:
determining, by the data proxy service, a storage location of the second display data based on the data directory in response to the preset condition being met; and
obtaining, by the data proxy service, the second display data based on the storage location.

11. The method according to any one of claims 1 to 9, wherein the electronic device further comprises a system service, the system service is further used to provide a data storage service for the data provider, the system service comprises a data directory corresponding to the data provider, and refreshing, by the data proxy service, the first widget in response to the preset condition being met comprises:
obtaining, by the data proxy service, the data directory from the system service in response to the preset condition being met;
determining, by the data proxy service, a storage location of the second display data based on the data directory; and
obtaining, by the data proxy service, the second display data based on the storage location.

12. An electronic device, comprising a processor, a memory, and a display, wherein the memory and the display are coupled to the processor, the memory is configured to store computer program code, the computer program code comprises computer instructions, and when the processor reads the computer instructions from the memory, the electronic device is enabled to perform the method according to any one of claims 1 to 11.

13. A computer-readable storage medium, wherein the computer-readable storage medium comprises a computer program, and when the computer program is run on an electronic device, the electronic device is enabled to perform the method according to any one of claims 1 to 11.

14. A computer program product, wherein when the computer program product runs on a computer, the computer is enabled to perform the method according to any one of claims 1 to 11.
